# EUROPÄISCHE PATENTSCHRIFT

(11) **EP 3 262 797 B1**
(45) Veröffentlichungstag und Bekanntmachung des Hinweises auf die Patenterteilung: **20.02.2019**
(21) Anmeldenummer: 16708080.3
(22) Anmeldetag: 29.02.2016
(51) Int. Cl.: H04L 12/46, H04L 12/26, H04L 29/06, B60R 16/023, H04L 12/931, H04L 12/40, G06F 21/44, B60R 21/01, H04L 12/24, G07C 5/08

(54) **KRAFTFAHRZEUG-KOMMUNIKATIONSNETZWERK MIT SWITCHVORRICHTUNG**
MOTOR VEHICLE COMMUNICATION NETWORK WITH SWITCH DEVICE
RÉSEAU DE COMMUNICATION DE VÉHICULE AUTOMOBILE MUNI D'UN DISPOSITIF DE COMMUTATION

(30) Priorität: 27.02.2015 DE 102015002574
(43) Veröffentlichungstag der Anmeldung: 03.01.2018
(73) Patentinhaber: Audi AG, 85045 Ingolstadt (DE)
(72) Erfinder: SCHMIDT, Karsten, 85051 Ingolstadt (DE); SCHOCH, Elmar, 85049 Ingolstadt (DE)
(74) Vertreter: Brandt, Kai
(86) Internationale Anmeldenummer: PCT/EP2016/000346
(87) Internationale Veröffentlichungsnummer: WO 2016/134855

(56) Entgegenhaltungen:
- EP-A1- 1 796 051
- DE-A1-102012 208 205

## Beschreibung

Die Erfindung betrifft ein Verfahren, um in einem Kommunikationsnetzwerk eines Kraftfahrzeugs Geräte des Kraftfahrzeugs vor Kommunikationsdaten eines nicht-authentifizierten Geräts zu schützen. Zu der Erfindung gehören auch eine Switchvorrichtung, durch welche das Kommunikationsnetzwerk bereitgestellt ist, sowie ein Kraftfahrzeug mit der erfindungsgemäßen Switchvorrichtung.

Bei einem Kraftfahrzeug kann ein Kommunikationsnetzwerk auf der Grundlage des Ethernet-Standards bereitgestellt werden. Eine Ethernet-Struktur kann aus Switches oder Switchvorrichtungen einerseits und Netzwerkteilnehmern, also Geräten des Kraftfahrzeugs, andererseits bestehen. Die Switchvorrichtung kann durch Bereitstellen eines VLAN (Virtual Local Area Network oder virtuellen Netzwerks) Kommunikationsdatenströme voneinander separieren. Hierdurch kann ein unautorisierter Zugriff eines Geräts auf ein anderes Gerät des Kraftfahrzeugs verhindert werden. Ein Kraftfahrzeug mit einer Switchvorrichtung, die ein VLAN bereitstellt, ist beispielsweise aus der DE 10 2013 202 064 A1 bekannt. Danach sind Geräte eines Kraftfahrzeugs an Ports einer Switchvorrichtung angeschlossen. Unter Port ist im Zusammenhang mit der Erfindung die physikalische Anschlusseinrichtung für ein Kommunikationskabel zu verstehen. An einem Port kann jeweils nur ein Kommunikationskabel angeschlossen werden.

Damit ein Gerät Kommunikationsdaten in ein VLAN einspeisen kann, also über einen Port des Switches in das VLAN übertragen kann, muss das Gerät für das VLAN zugelassen sein. Eine Authentifizierung mittels Ansätzen basierend auf dem Netzwerk-Standard IEEE 802.1x kann hierzu beispielhaft vorgesehen sein. Ist ein Gerät nicht authentifiziert, weil seine Gerätekennung nicht als autorisiert oder gültig für das VLAN der Switchvorrichtung eingetragen oder abgespeichert ist, schaltet die Switchvorrichtung jegliche Kommunikation am betroffenen Switch-Port ab. Ausgenommen ist hier nur der Empfang von einer erneuten Authentifizierungsanfrage des Geräts.
Dies bedeutet jedoch, dass keine weitere Kommunikation zu einem nicht-autorisierten Gerät über das Kraftfahrzeug-Kommunikationsnetzwerk stattfinden kann. Aus der Perspektive der Datensicherheit ist dies ein wünschenswertes Verhalten. Nachteilig hieran ist, dass beispielsweise auch in einer Werkstatt das nicht-autorisierte Gerät über das Kommunikationsnetzwerk nicht erkannt werden kann. Hierdurch bleibt dann unklar, weshalb das Gerät im Kraftfahrzeug nicht korrekt funktioniert.
Ein Kraftfahrzeug mit einem Ethernet-Netzwerk als Kommunikationsnetzwerk ist beispielsweise aus der DE 10 2012 208 205 A1 bekannt. Komponenten des Netzwerks sind über eine Switchvorrichtung miteinander verbunden. Durch Auswerten eines VLAN-Tag können einzelne Datenpakete aus Kommunikationsdaten der Geräte einer bestimmten Klasse von Daten zugeordnet werden.
Aus der DE 10 2006 009 583 A1 ist bekannt, Diagnosefunktionalitäten durch ein Diagnosemodul in einem Kraftfahrzeug (on board) bereitzustellen. Zusätzlich kann ein fahrzeugexterner Tester oder ein Diagnosegerät an das Kraftfahrzeug angeschlossen werden, um weitere Diagnosemodule zur Verfügung zu stellen.

Das Dokument DE 10 2012 208205 zeigt ein Verfahren mit den Merkmale des Präambels des Anspruchs 1. Das Dokument EP 1 796 051 A1 zeigt ein weiteres Fahrzeugkommunikationsverfahren. Der Erfindung liegt die Aufgabe zugrunde, in einem Kraftfahrzeug eine umfangreiche Diagnose der Kraftfahrzeug-Geräte zu ermöglichen.
Die Aufgabe wird durch die Gegenstände der unabhängigen Patentansprüche 1 und 8 gelöst. Vorteilhafte Weiterbildungen der Erfindung ergeben sich durch die Merkmale der abhängigen Patentsprüche.
Erfindungsgemäß bereitgestellt wird eine Switchvorrichtung für ein Kraftfahrzeug. Die Switchvorrichtung weist Ports zum Anschließen von Geräten des Kraftfahrzeugs sowie eine Steuereinrichtung auf. Die Steuereinrichtung ist dazu ausgelegt, eine Ausführungsform des im Folgenden beschriebenen erfindungsgemäßen Verfahrens durchzuführen. Die Steuereinrichtung kann beispielsweise durch eine Prozessoreinrichtung der Switchvorrichtung bereitgestellt sein. Die Switchvorrichtung kann beispielsweise als Switch (Netzwerkweiche oder Verteiler) oder Router ausgestaltet sein. Insbesondere ist die Switchvorrichtung dazu ausgelegt, gemäß dem Ethernet-Standard Daten zwischen den Ports in bekannter Weise auszutauschen.

Zu der Erfindung gehört auch ein Kraftfahrzeug, welches die erfindungsgemäße Switchvorrichtung aufweist. In dem Kraftfahrzeug ist an den Ports der Switchvorrichtung jeweils ein Gerät des Kraftfahrzeugs angeschlossen. An der Switchvorrichtung können die Geräte beispielsweise über Netzwerkkabel angeschlossen sein, beispielsweise Ethernet-Kabel. Durch die Switchvorrichtung wird ein Kommunikationsnetzwerk zum Austausch von Kommunikationsdaten zwischen den Geräten bereitgestellt. Die Kommunikationsdaten werden dabei innerhalb des Kommunikationsnetzwerks in einem ersten VLAN zwischen den Geräten ausgetauscht.

Besonders bevorzugt ist eine Ausführungsform, bei welcher eines oder einige oder jedes der Geräte jeweils ein Steuergerät zum Einstellen eines Fahrbetriebs und/oder einer Fahrdynamik des Kraftfahrzeugs ist. Mit anderen Worten handelt es sich bei den Steuergeräten insbesondere um fahrsicherheitsrelevante Geräte. Für solche sicherheitsrelevanten Geräte ist eine Authentitätsprüfung besonders relevant und vorteilsbringend, da hierdurch die Sicherheit der Fahrzeuginsassen verbessert ist. Unter Fahrbetrieb ist hierbei derjenige technische Vorgang zu verstehen, der das Eigenbewegen des Kraftfahrzeugs betrifft.

Durch das erfindungsgemäße Verfahren wird die Switchvorrichtung des Kraftfahrzeug-Kommunikationsnetzwerks in der folgenden Weise betrieben: An einem der Ports, der hier als erster Port bezeichnet ist, empfängt die Switchvorrichtung eine Gerätekennung eines der Geräte des Kraftfahrzeugs. Es wird eine Authentitätsprüfung des Geräts auf der Grundlage der Gerätekennung durchgeführt. Mit anderen Worten wird überprüft, ob zu der Gerätekennung beispielsweise in der Switchvorrichtung abgespeichert ist, dass ein Gerät mit dieser Gerätekennung für das erste VLAN zugelassen ist, also das erste VLAN nutzen darf. Die Gerätekennung kann insbesondere kryptographisch gesichert sein. Es kann dann beispielsweise eine Authentifizierung auf der Grundlagen einer an sich bekannten Challenge-Response-Authentifikation (Englisch: challenge-response authentication) durchgeführt werden.

Falls ein Prüfergebnis der Authentitätsprüfung positiv ist, also das Gerät zugelassen ist oder die Gerätekennung gültig ist, werden an dem ersten Port Kommunikationsdaten des Geräts empfangen, die an zumindest ein weiteres Gerät des Kraftfahrzeugs adressiert sind. Die Adressierung kann hierbei in der an sich aus der Computer-Netzwerktechnologie bekannten Art und Weise erfolgen, z.B. über ein IP-Adresse (IP - Internet Protocol). Die empfangenen Kommunikationsdaten werden in dem ersten VLAN des Kommunikationsnetzwerks an das zumindest eine weitere Gerät übertragen. Bei den Kommunikationsdaten handelt es sich insbesondere um Daten, die den Fahrbetrieb und/oder die Fahrdynamik des Kraftfahrzeugs beeinflussen.

Falls aber das Prüfergebnis negativ ist, werden die Kommunikationsdaten an dem ersten Port durch die Switchvorrichtung abgelehnt oder ignoriert oder gelöscht. Mit anderen Worten darf oder kann das Gerät bei negativem Prüfergebnis, wenn die Gerätekennung ungültig ist oder das Gerät nicht authentifiziert ist, seine Kommunikationsdaten nicht in das erste VLAN übertragen. Hierdurch sind die übrigen Geräte vor einem Einfluss des nicht-authentifizierten oder nicht-autorisierten Geräts, das heißt vor dessen Kommunikationsdaten, geschützt. Insbesondere werden an das Gerät auch keine Kommunikationsdaten der anderen Geräte aus dem ersten VLAN über den ersten Port ausgegeben.

Das Verfahren sieht aber des Weiteren vor, dass an einem zweiten Port der Switchvorrichtung eine von einem Diagnosegerät erzeugte Diagnoseanfrage für das Gerät empfangen wird. Mit anderen Worten signalisiert das Diagnosegerät, dass es von dem an dem ersten Port angeschlossenen Gerät Diagnosedaten anfordern möchte. Bei dem erfindungsgemäßen Verfahren wird nun durch die Switchvorrichtung unabhängig von dem Prüfergebnis (authentifiziertes Gerät oder nicht-authentifiziertes Gerät) die Diagnoseanfrage über den besagten ersten Port an das Gerät weitergeleitet. Die Diagnoseanfrage wird hierbei in einem zweiten VLAN des Kommunikationsnetzes übertragen.

Durch die Erfindung ergibt sich der Vorteil, dass die Diagnosefähigkeit auch für eines solchen Gerätes erhalten bleibt, welches einer Kommunikationsabschaltung für Nutzdaten unterliegt, das heißt dessen Kommunikationsdaten an dem ersten Port abgelehnt werden, weil das Gerät nicht erfolgreich authentifiziert worden ist.

Zu der Erfindung gehören auch Weiterbildungen, durch deren Merkmale sich zusätzliche Vorteile ergeben.

In einer Weiterbildung werden Diagnosedaten des Geräts, die das Gerät in Antwort auf oder in Reaktion auf die Diagnoseanfrage erzeugt, unabhängig von dem Prüfergebnis (Gerät authentifiziert oder nicht-authentifiziert) in dem zweiten VLAN an das Diagnosegerät übertragen. Mit anderen Worten kann das Gerät unabhängig von dem Prüfergebnis der Authentitätsprüfung Diagnosedaten an den ersten Port und über das zweite VLAN aussenden, insbesondere an das Diagnosegerät, also über den zweiten Port. Dabei bleibt aber weiterhin das Aussenden von Kommunikationsdaten in das erste VLAN gesperrt. Hierdurch ergibt sich der Vorteil, dass das Gerät auch mittels der Diagnosedaten keinen Einfluss auf die übrigen Geräte des Kommunikationsnetzwerks ausüben kann.

Gemäß einer Weiterbildung werden durch die Switchvorrichtung Kommunikationsdaten des Geräts in das erste VLAN weitergeleitet, solange die Authentitätsprüfung andauert. Mit anderen Worten kann das Gerät zunächst über den ersten Port mit den anderen Geräte kommunizieren, das heißt Kommunikationsdaten aussenden. Währenddessen kann durch die Switchvorrichtung die Authentitätsprüfung durchgeführt werden. Solange noch kein Prüfungsergebnis vorliegt, kann das Gerät Kommunikationsdaten über den ersten Port in das erste VLAN aussenden. Falls das Prüfergebnis dann besagt, dass das Gerät nicht authentifiziert werden konnte, also nicht autorisiert ist, werden ab diesem Zeitpunkt an dem ersten Port die Kommunikationsdaten des Geräts abgelehnt oder blockiert. Hierdurch ergibt sich der Vorteil, dass die Switchvorrichtung ressourcenarm ausgestaltet sein kann, ohne dass es hierdurch zu einer Verzögerung der Kommunikation im ersten VLAN kommt. Dies ist insbesondere beim Hochfahren oder Booten oder Starten eines Kraftfahrzeugs besonders wichtig.

Deshalb wird diese Ausführungsform bevorzugt auch während eines Starts des Kraftfahrzeugs und insbesondere ausschließlich während eines Starts des Kraftfahrzeugs durchgeführt.

Gemäß einer Weiterbildung werden die Diagnosedaten nur weitergeleitet, falls ein Prüfergebnis einer Authentitätsprüfung des Diagnosegeräts positiv ist. Mit anderen Worten wird auch für das Diagnosegerät eine Authentitätsprüfung durchgeführt. Hierdurch ergibt sich der Vorteil, dass auch über den zweiten Port der Switchvorrichtung, das heißt den Diagnoseport, keine Schaddaten durch ein nicht-authentifiziertes Gerät an ein Gerät des Kraftfahrzeugs übertragen werden können.

Gemäß einer Weiterbildung wird das zweite VLAN dynamisch aufgebaut. Mit anderen Worten wird das zweite VLAN erst bei Bedarf bereitgestellt, wenn also beispielsweise ein Diagnosegerät an den zweiten Port eine Diagnoseanfrage aussendet. Insbesondere wird das zweite VLAN nach Beendigung der Diagnose, wenn also beispielsweise ein Diagnoseabschlusssignal durch die Switchvorrichtung empfangen worden ist, wieder beendet. Durch die Weiterbildung ergibt sich der Vorteil, dass kein ungenutzter Kommunikationskanal in dem Kommunikationsnetzwerk existiert, über welchen Schaddaten, beispielsweise nicht-authentifizierte Steuerbefehle, an ein Gerät des Kraftfahrzeugs ausgesendet werden können.

Gemäß einer Weiterbildung wird die Authentitätsprüfung des Geräts während eines Starts des Kraftfahrzeugs durchgeführt. Mit anderen Worten wird die Authentitätsprüfung beim Hochfahren oder Booten des Kraftfahrzeugs durchgeführt, wenn das Gerät und/oder die Switchvorrichtung nach einer Parkphase eingeschaltet oder in Betrieb genommen werden. Dies kann beispielsweise nach Einschalten der Zündung des Kraftfahrzeugs erfolgen. Während des Hochfahrens des Kraftfahrzeugs ist das Ablehnen von Kommunikationsdaten ungefährlich.

Gemäß einer Weiterbildung ist aber auch das Blockieren des ersten VLAN am ersten Port während des Fahrbetriebs vorgesehen, um den Fall zu berücksichtigen, dass bei dem Gerät während des Betriebs des Kraftfahrzeugs ein Defekt auftritt. Bei dieser Weiterbildung wird durch die Switchvorrichtung ein Sperrbefehl empfangen, der von außerhalb der Switchvorrichtung kommen kann, das heißt durch ein vorrichtungsexternes Gerät erzeugt worden sein kann. In Abhängigkeit von dem Sperrbefehl und unabhängig von dem Prüfergebnis werden dann an dem ersten Port die Kommunikationsdaten des Geräts durch die Switchvorrichtung abgelehnt. Hierdurch ergibt sich der Vorteil, dass eine Diagnoseeinrichtung des Kraftfahrzeugs einen Sperrbefehl erzeugen kann, falls im Betrieb des Kraftfahrzeugs ein von dem ersten Gerät ausgehender Angriff oder unerwünschter Einfluss erkannt wird. Hierdurch kann beispielsweise dem Problem eines sogenannten "Babbling Idiot" begegnet werden. Falls ein Gerät zu häufig und/oder unkontrolliert Kommunikationsdaten in das erste VLAN aussendet, kann durch den Sperrbefehl das erste Gerät von dem ersten VLAN ausgeschlossen werden, indem seine Kommunikationsdaten am ersten Port abgelehnt werden.

Das erfindungsgemäße Kraftfahrzeug ist bevorzugt als Kraftwagen, insbesondere als Personenkraftwagen, ausgestaltet.

Im Folgenden ist ein Ausführungsbeispiel der Erfindung beschrieben. Hierzu zeigt:
- Fig. 1: eine schematische Darstellung einer Ausführungsform des erfindungsgemäßen Kraftfahrzeugs mit einem Kommunikationsnetzwerk,
- Fig. 2: das Kraftfahrzeug von Fig. 1 nach Erkennen eines nichtautorisierten Geräts,
- Fig. 3: eine schematische Darstellung des Kraftfahrzeugs von Fig. 1 während einer Diagnose des nicht-autorisierten Geräts.

Bei dem im Folgenden erläuterten Ausführungsbeispiel handelt es sich um eine bevorzugte Ausführungsform der Erfindung. Bei dem Ausführungsbeispiel stellen aber die beschriebenen Komponenten der Ausführungsform jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren ist die beschriebene Ausführungsform auch durch weitere der bereits beschriebenen Merkmale der Erfindung ergänzbar.

In den Figuren sind funktionsgleiche Elemente jeweils mit denselben Bezugszeichen versehen.

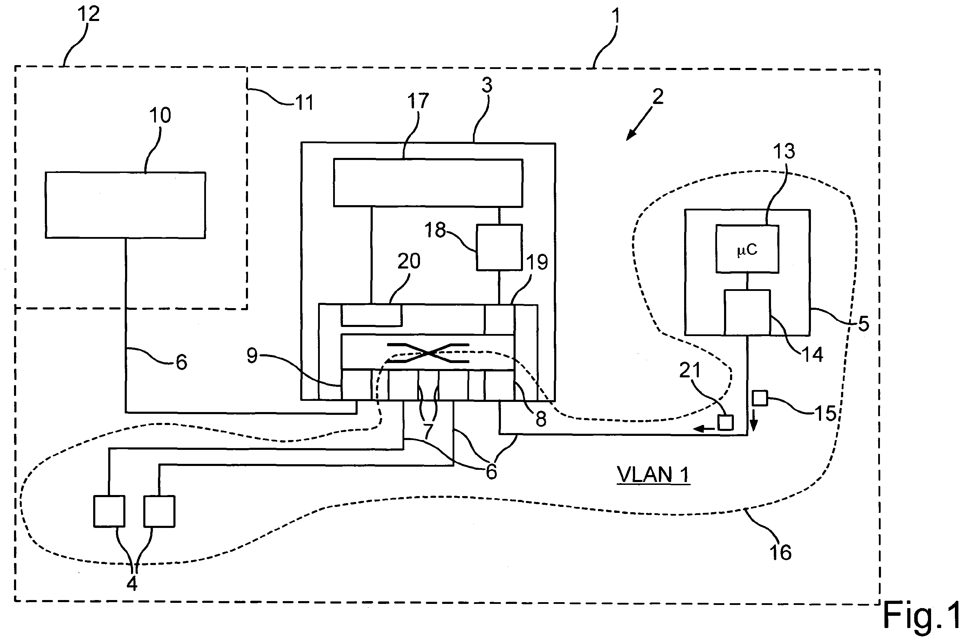

Fig. 1 zeigt ein Kraftfahrzeug 1, bei dem es sich beispielsweise um einen Kraftwagen, insbesondere einen Personenkraftwagen, handeln kann. Das Kraftfahrzeug 1 kann ein Kommunikationsnetzwerk 2 aufweisen, das durch eine Switchvorrichtung 3 gebildet sein kann, an welches Geräte 4, 5 des Kraftfahrzeugs 1 angeschlossen sein können. Jedes Gerät 4, 5 kann über ein Netzwerkkabel oder Kommunikationskabel 6 an einen Netzwerkkabelanschluss oder eine Anschlusseinrichtung oder einen Port 7, 8 jeweils angeschlossen sein. Beispielsweise kann jeder Port 7, 8 nach dem Standard RJ45 als Buchse für einen RJ45-Stecker oder als eine andere elektrische Schnittstelle mit elektrischen Kontakten ausgestaltet sein. Mit Port sind also insbesondere sowohl die mechanische Ausgestaltung der Anschlusseinrichtung als auch die elektrischen Kontakte gemeint.

Bei der Switchvorrichtung 3 kann an einem weiteren Port 9 ein Diagnosegerät 10 temporär oder dauerhaft angeschlossen sein. In einer ersten Variante 11 kann das Diagnosegerät 10 ein fahrzeugexternes Gerät sein, das beispielsweise in einer Werkstatt an den Port 9 angeschlossen werden kann. In einer zweiten Variante 12 kann das Diagnosegerät 10 in das Kraftfahrzeug 1 integriert sein. Das Diagnosegerät 10 kann ebenfalls über ein Netzwerkkabel 6 mit dem Port 9 verbunden sein.

An dem Gerät 5 ist veranschaulicht, dass jedes der Geräte 4, 5 als Steuergerät ausgestaltet sein kann, welches eine Prozessoreinrichtung 13 aufweisen kann, welche über einen Netzwerkanschluss 14, der beispielsweise einen Ethernet-Controller und/oder einen elektrischen Netzwerkanschluss umfassen kann, mit dem Netzwerkkabel 6 gekoppelt sein kann.

Während des Betriebs des Kraftfahrzeugs 1 können die Geräte 4, 5 über das Kommunikationsnetzwerk 2 Kommunikationsdaten austauschen. Eine Kommunikation der Geräte 4, 5 über das Kommunikationsnetzwerk 2 kann z.B. gemäß dem Ethernet-Standard und/oder auf der Grundlage des IP erfolgen.

Beispielhaft kann das Gerät 5 Kommunikationsdaten 15 an eines der Geräte 4 in das Kommunikationsnetzwerk 2 aussenden. Die Kommunikationsdaten 15 werden in einem virtuellen oder logischen Netzwerk durch die Switchvorrichtung 3 verwaltet. Das Austauschen der Kommunikationsdaten 15 erfolgt hierdurch in einem Virtual-Local-Area-Network oder virtuellem Netzwerk 16 (VLAN 1), wie es an sich aus dem Stand der Technik bekannt ist.

In das virtuelle Netzwerk 16 dürfen bei dem Kraftfahrzeug 1 aber nur autorisierte Geräte ihre Kommunikationsdaten hinein senden. Die Switchvorrichtung 3 kann zur Überprüfung der Authentizität eines jeden Geräts eine Steuereinrichtung 17 aufweisen, die beispielsweise durch eine Prozessoreinrichtung, beispielsweise einen Mikrocontroller (µC) oder ein Embedded-System (eingebettetes System) bereitgestellt sein kann. Die Steuereinrichtung 17 kann, ähnlich wie bei dem Gerät 5 gezeigt, über einen Netzwerkanschluss 18 und einen weiteren Port 19 mit den Ports 7, 8, 9 gekoppelt sein, an welchen die Geräte 4, 5 und das Diagnosegerät 10 angeschlossen sind. Des Weiteren kann durch die Steuereinrichtung 17 über einen Konfigurationsanschluss 20 eine Portsteuerung der Ports 7, 8, 9 vorgesehen sein. Hierdurch kann durch die Steuereinrichtung 17 gesteuert oder festgelegt werden, ob über einen bestimmten Port 7, 8, 9 Kommunikationsdaten empfang oder akzeptiert oder ausgegeben werden oder ob die Kommunikationsdaten ablehnt oder blockiert oder ignoriert werden.

Beispielsweise kann bei dem Kraftfahrzeug 1 vorgesehen sein, dass in einer Autorisierungsphase, beispielsweise während eines Starts des Kraftfahrzeugs 1, jedes Gerät 4, 5 das an einem Port 7, 8 angeschlossen ist, eine jeweilige Gerätekennung 21 an den jeweiligen Port 7, 8 aussendet. Die Gerätekennung 21 kann insbesondere kryptographisch gesichert sein. Es kann dann beispielsweise eine Authentifizierung auf der Grundlagen einer an sich bekannten Challenge-Response-Methode durchgeführt werden.

In Fig. 1 ist beispielhaft für das Gerät 5 veranschaulicht, dass das Gerät 5 seine Gerätekennung 21 an den Port 8 aussendet. Die Gerätekennung 21 kann beispielsweise einen Hersteller des Geräts 5 oder eine Kennziffer oder Kennzahl enthalten, die in das Gerät 5 eingespeichert worden sein kann, als der Benutzer des Kraftfahrzeugs 1 das Gerät 5 gekauft hat. Über den Port 8 kann die Steuereinrichtung 17 die Gerätekennung 21 des Geräts 5 empfangen. Die Steuereinrichtung 17 kann dann die Gerätekennung 21 beispielsweise mit einer Liste von zugelassenen Geräten vergleichen, deren jeweilige Gerätekennung in der Switchvorrichtung 3 abgespeichert sein kann.

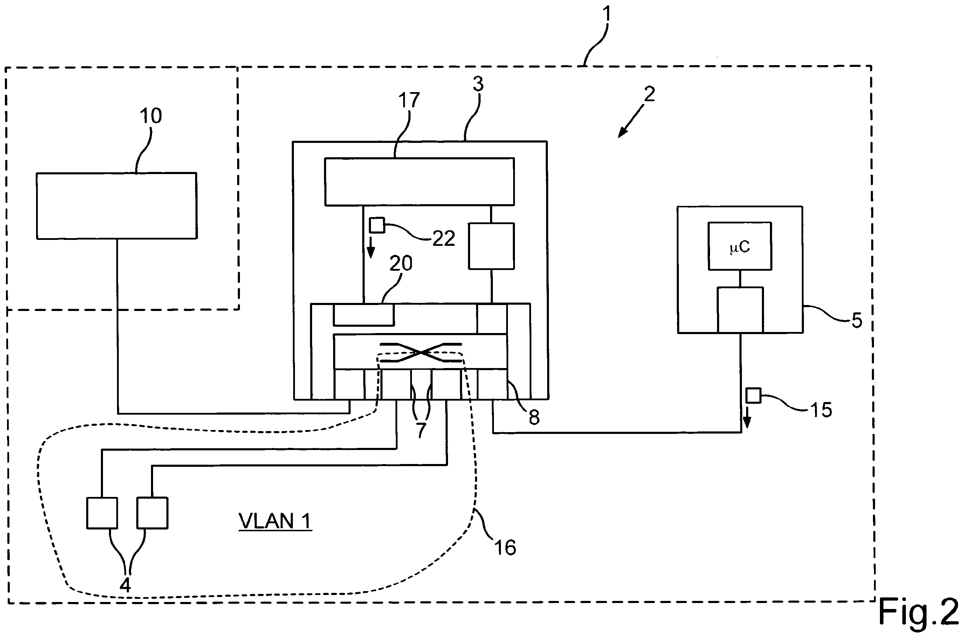

Falls das Prüfergebnis positiv ist, das heißt das Gerät 5 gemäß der Gerätekennung 21 integer oder zugelassen ist, so kann sich das in Fig. 1 veranschaulichte virtuelle Netzwerk 16 ergeben, in welches das Gerät 5 integriert ist. Falls das Gerät 5 nicht zugelassen ist, das heißt das Prüfergebnis zu der Gerätekennung 21 negativ ist, also das Gerät 5, das heißt die Gerätekennung 21, nicht als zugelassen in der Switchvorrichtung 3 gespeichert ist, kann über einen Konfigurationsbefehl 22 am Konfigurationseingang 20 durch die Steuereinrichtung 17 veranlasst oder gesteuert werden, dass Kommunikationsdaten 15 des Geräts 5 am Port 8 abgelehnt werden oder blockiert werden oder ignoriert werden. Hierdurch ergibt sich das in Fig. 2 veranschaulichte virtuelle Netzwerk 16, aus welchem das Gerät 5 ausgeschlossen ist.

Im folgenden wird angenommen, dass das Prüfergebnis negativ war und sicher die Situation gemäß Fig. 2 ergeben hat.

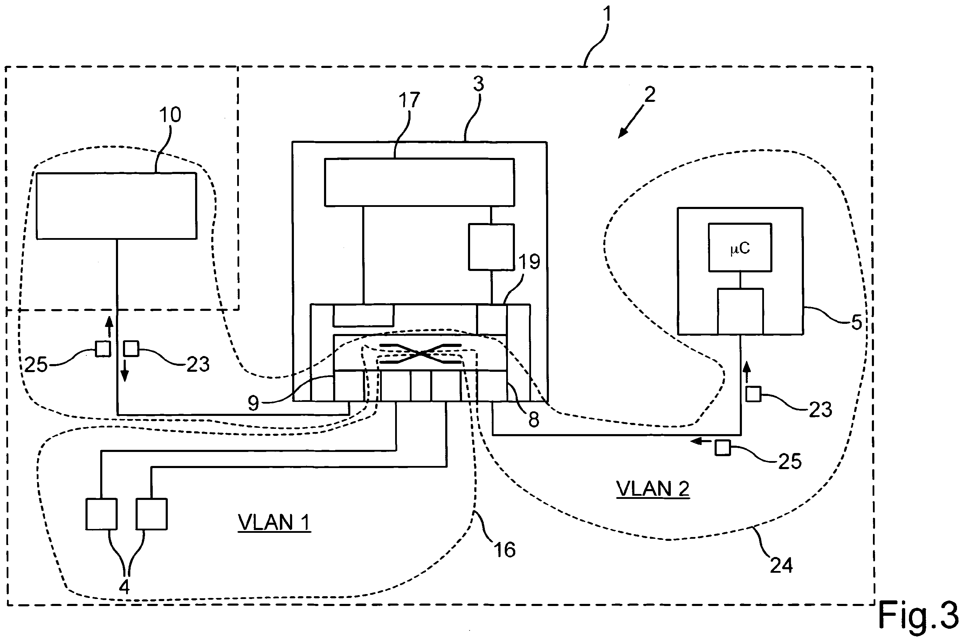

Während einer Diagnose oder Überprüfung des Kraftfahrzeugs 1 kann vorgesehen sein, dass mittels des Diagnosegeräts 10 eine Diagnoseanfrage 23 erzeugt wird, das heißt ein Datenpaket mit einem Diagnosebefehl, das beispielsweise an das Gerät 5 über das Kommunikationsnetzwerk 2 zu übertragen ist. Die Diagnoseanfrage 23 kann beispielsweise über den Port 9 und den Port 19 an die Steuereinrichtung 17 übertragen werden. Durch die Steuereinrichtung 17 kann erkannt werden, dass es sich bei der Diagnoseanfrage 23 nicht um Kommunikationsdaten für einen Fahrbetrieb oder eine Fahrdynamikeinstellung handelt, sondern um eine Aufforderung oder einem Befehl zum Erzeugen von Diagnosedaten. Beispielsweise kann dies daran festgemacht werden, dass die Daten über den Port 9 empfangen worden sind. Die Steuereinrichtung 17 kann daher vorsehen, dass der Port 8, über welchen das nicht-autorisierte Gerät 5 erreichbar ist, für das Aussenden der Diagnoseanfrage 23 genutzt wird. Dies kann erreicht werden, indem ein zweites virtuelles Netzwerk 24 eingerichtet oder konfiguriert wird, das ebenfalls nach dem Standard VLAN ausgestaltet sein kann (VLAN 2). Es ergibt sich die Situation, die in FIG 3 veranschaulicht ist.

Nun ist es möglich, dass die Diagnoseanfrage 23 an das Gerät 5 weitergeleitet wird, ohne dass hiervon das virtuelle Netzwerk 16 der zugelassenen oder autorisierten Geräte 4 beeinträchtigt ist. In Reaktion auf die Diagnoseanfrage 23 kann das Gerät 5 Diagnosedaten 25 erzeugen, die am Port 8 akzeptiert werden können und über das zweite virtuelle Netzwerk 24 an dem Port 9 ausgegeben werden können und hierdurch zu dem Diagnosegerät 10 übertragen werden können. Durch die logische Trennung der virtuellen Netzwerke 16, 24 ist eine Übertragung von Daten zwischen diesen beiden virtuellen Netzwerken 16, 24 nicht möglich. Hierdurch bleiben die Geräte 4 des ersten virtuellen Netzwerks 16 vor Daten des Geräts 5 geschützt.

Bei dem Kraftfahrzeug 1 besteht somit die primäre Idee darin, dass Steuergeräte, wie die Geräte 4, 5, sich am Switch 3 authentifizieren müssen. Dafür können gängige Verfahren genutzt werden. Jedoch wird der Port 8 am Switch 3 auch bei einer erfolglosen Authentisierung nicht komplett abgeschaltet, sondern lediglich das produktive VLAN deaktiviert, also das virtuelle Netzwerk 16 in dem Beispiel. Eine Kommunikation und Störung des Netzwerks 16 kann so nicht mehr stattfinden. Für Diagnose kann ein spezielles VLAN dynamisch aufgebaut werden, welches der Switch 3 auch ohne Authentisierung gezielt durchlässt, nämlich im Beispiel das Netzwerk 24.

Somit ergibt sich als primärer Vorteil der Erhält der Diagnosefähigkeit bei gleichzeitiger Kommunikationsabschaltung für Nutzdaten, das heißt Kommunikationsdaten, im Kraftfahrzeug 1.

Grundlegende Mechanismen für diese beschriebene Idee können auf der Basis eines VLAN mit Switchvorrichtungen oder Switch-Systemen aufwandsarm zur Verfügung gestellt werden.

Insgesamt zeigt das Beispiel, wie durch die Erfindung die Diagnosefähigkeit bei gleichzeitiger Kommunikationsabschaltung in Automotive-Ethernet-Netzwerken aufrecht erhalten werden kann.

## Patentansprüche

1. Verfahren zum Betreiben einer Switchvorrichtung (3) eines Kraftfahrzeug- Kommunikationsnetzwerks (2), mit den Schritten:
- Empfangen einer Gerätekennung (21) eines Geräts (5) des Kraftfahrzeugs (1) an einem ersten Port (8) der Switchvorrichtung (3),
- Durchführen einer Authentitätsprüfung des Geräts (5) auf der Grundlage der Gerätekennung (21),
- falls ein Prüfergebnis der Authentitätsprüfung positiv ist, Empfangen von an zumindest ein weiteres Gerät (4) des Kraftfahrzeugs (1) adressierten Kommunikationsdaten (15) des Geräts (5) an dem ersten Port (8) und Übertragen der Kommunikationsdaten (15) in einem ersten VLAN (16) des Kommunikationsnetzwerks (2) an das zumindest eine weitere Gerät (4),
- falls das Prüfergebnis negativ ist, Ablehnen der Kommunikationsdaten (15) an dem ersten Port (8), so dass bei negativem Prüfergebnis, wenn das Gerät (5) nicht authentifiziert ist, seine Kommunikationsdaten (15) nicht in das erste VLAN übertragen werden und hierdurch übrige Geräte (4) vor den Kommunikationsdaten (15) des Geräts (5) geschützt sind, **gekennzeichnet durch** die Schritte:
- an das Gerät (5) werden auch keine Kommunikationsdaten der übrigen Geräte (4) aus dem ersten VLAN (16) über den ersten Port (8) ausgegeben,
- Empfangen einer Diagnoseanfrage (23) für das Gerät (5) von einem Diagnosegerät (10) an einem zweiten Port (9) der Switchvorrichtung (3), wobei das Diagnosegerät (10) mittels der Diagnoseanfrage (23) signalisiert, dass es von dem an dem ersten Port (8) angeschlossenen Gerät (5) Diagnosedaten (25) anfordern möchte,
- unabhängig von dem Prüfergebnis Weiterleiten der Diagnoseanfrage (23) über den ersten Port (8) an das Gerät (5) in einem zweiten VLAN (24) des Kommunikationsnetzwerks (2), so dass die Diagnosefähigkeit für das Gerät (5) auch erhalten bleibt, falls dessen Kommunikationsdaten (15) an dem ersten Port (15) abgelehnt werden, weil das Gerät (15) nicht erfolgreich authentifiziert worden ist.

2. Verfahren nach Anspruch 1, wobei zu der Diagnoseanfrage (23) erzeugte Diagnosedaten (25) des Geräts (5) unabhängig von dem Prüfergebnis in dem zweiten VLAN (24) an das Diagnosegerät (10) übertragen werden.

3. Verfahren nach einem der vorhergehenden Ansprüche, wobei durch die Switchvorrichtung (3) Kommunikationsdaten (15) des Geräts (5) in das erste VLAN (16) weitergeleitet werden, solange die Authentitätsprüfung andauert.

4. Verfahren nach einem der vorhergehenden Ansprüche, wobei die Diagnosedaten (25) nur weitergeleitet werden, falls ein Prüfergebnis einer Authentitätsprüfung betreffend das Diagnosegeräts (10) positiv ist.

5. Verfahren nach einem der vorhergehenden Ansprüche, wobei das zweite VLAN (25) dynamisch aufgebaut wird.

6. Verfahren nach einem der vorhergehenden Ansprüche, wobei die Authentitätsprüfung des Geräts (5) während eines Starts des Kraftfahrzeugs (1) durchgeführt wird.

7. Verfahren nach einem der vorhergehenden Ansprüche, wobei durch die Switchvorrichtung (3) ein Sperrbefehl empfangen wird und in Abhängigkeit von dem Sperrbefehl und unabhängig von dem Prüfergebnis die Kommunikationsdaten (15) des Geräts (5) an dem ersten Port (8) abgelehnt werden.

8. Switchvorrichtung (3) für ein Kraftfahrzeug (1), mit Ports (7, 8) zum Anschließen von Geräten (4, 5) des Kraftfahrzeugs (1) und mit einer Steuereinrichtung (17), die dazu ausgelegt ist, ein Verfahren nach einem der vorhergehenden Ansprüche durchzuführen.

9. Kraftfahrzeug (1) mit einer Switchvorrichtung (3) nach Anspruch 8, an deren Ports (7, 8) jeweils ein Gerät (4, 5) des Kraftfahrzeugs (1) angeschlossen ist und durch welche ein Kommunikationsnetzwerk (2) zum Austauschen von Kommunikationsdaten (15) in einem ersten VLAN (16) für die Geräte (4, 5) bereitgestellt ist.

10. Kraftfahrzeug (1) nach Anspruch 9, wobei eines oder einige oder jedes der Geräte (4, 5) jeweils ein Steuergerät zum Einstellen eines Fahrbetriebs und/oder einer Fahrdynamik des Kraftfahrzeugs (1) ist.

## Claims

1. Method for operating a switch device (3) of a motor vehicle communication network (2), having the steps:
- receiving a device recognition (21) of a device (5) of the motor vehicle (1) at a first port of the switch device (3),
- carrying out an authenticity check of the device (5) on the basis of the device recognition (21),
- in the case that a check result of the authenticity check is positive, receiving communication data (15), addressed to at least one further device (4) of the motor vehicle (1), of the device (5) at the first port (8) and transmission of the communication data (15) in a first VLAN (16) of the communication network (2) to the at least one further device (4),
- in the case that the check result is negative, rejection of the communication data (15) at the first port (8) such that in the case of a negative check result, if the device (5) is not authenticated, its communication data (15) is not transferred into the first VLAN and hereby remaining devices (4) are protected from the communication data (15) of the device (5)
**characterised by** the steps:
- to the device (5) are outputted also no communication data of the remaining devices (4) out of the first VLAN (16) via the first port (8),
- receiving a diagnosis request (23) for the device (5) from a diagnosis device (10) at a second port (9) of the switch device (3), wherein the diagnosis device (10) signals by means of the diagnosis request (23) that it wishes to obtain diagnosis data (25) from the device (5) connected at the first port (8),
- independently from the check results, forwarding the diagnosis request (23) via the first port (8) to the device (5) in a second VLAN (24) of the communication network (2) such that the diagnosis capability for the device (5) is also retained in the case that its communication data (15) is rejected at the first port (15) because the device (15) is not been successfully authenticated.

2. Method according to claim 1, wherein diagnosis data (25) of the device (5) generated in answer to the diagnosis request (23) are transmitted, independently of the check result in the second VLAN (24), to the diagnosis device (10).

3. Method according to any of the preceding claims, wherein via the switch device (3) communication data (15) of the device (5) are forwarded into the first VLAN (16) as long as the authenticity check lasts.

4. Method according to any of the preceding claims, wherein the diagnosis data (25) are only forwarded in the case that a check result of an authenticity check regarding the diagnosis device (10) is positive.

5. Method according to any of the preceding claims, wherein the second VLAN (25) is dynamically built.

6. Method according to any of the preceding claims, wherein the authenticity check of the device (5) is carried out during a start of the motor vehicle (1).

7. Method according to any of the preceding claims, wherein via the switch device (3) a shut-off instruction is received and depending on the shut-off instruction and independently of the check result the communication data (15) of the device (5) are rejected at the first port (8).

8. Switch device (3) for a motor vehicle (1), having ports (7, 8) for the connecting of devices (4, 5) of the motor vehicle (1) and having a control device (17) which is configured to carry out a method according to any of the preceding claims.

9. Motor vehicle (1) having a switch device (3) according to claim 8, at the ports (7, 8) of which respectively one device (4, 5) of the motor vehicle (1) is connected and via which a communication network (2) for the exchange of communication data (15) in a first VLAN (16) is provided for the devices (4, 5).

10. Motor vehicle (1) according to claim 9, wherein one or several or each of the devices (4, 5) is respectively a control device for the adjusting of a driving operation and/or a driving dynamic of the motor vehicle (1).

## Revendications

1. Procédé de fonctionnement d'un dispositif de commutation (3) d'un réseau de communication de véhicule automobile (2), avec les étapes suivantes :
- la réception d'une reconnaissance d'appareil (21) d'un appareil (5) du véhicule automobile (1) au niveau d'un premier port (8) du dispositif de commutation (3),
- l'exécution d'une vérification d'authenticité de l'appareil (5) sur la base de la reconnaissance d'appareil (21),
- si un résultat de vérification de la vérification d'authenticité est positif, la réception de données de communication (15) de l'appareil (5) adressées à au moins un autre appareil (4) du véhicule automobile (1) au niveau du premier port (8) et la transmission des données de communication (15) dans un premier VLAN (16) du réseau de communication (2) à l'au moins un autre appareil (4),
- si le résultat de vérification est négatif, le rejet des données de communication (15) au niveau du premier port (8) de sorte que, en cas de résultat de vérification négatif, lorsque l'appareil (5) n'est pas authentifié, ses données de communication (15) ne soient pas transmises dans le premier VLAN et, de cette façon, des appareils (4) restants soient protégés contre les données de communication (15) de l'appareil (5),
**caractérisé par** les étapes :
- également aucune donnée de communication des appareils (4) restants n'est délivrée à l'appareil (5) à partir du premier VLAN (16) via le premier port (8),
- la réception d'une demande de diagnostic (23) pour l'appareil (5) par un appareil de diagnostic (10) au niveau d'un second port (9) du dispositif de commutation (3), dans lequel l'appareil de diagnostic (10) signalise au moyen de la demande de diagnostic (23) qu'il voudrait demander des données de diagnostic (25) à l'appareil (5) branché sur le premier port (8),
- indépendamment du résultat de vérification, le transfert de la demande de diagnostic (23) via le premier port (8) à l'appareil (5) dans un second VLAN (24) du réseau de communication (2) de sorte que la capacité de diagnostic reste également maintenue pour l'appareil (5) dans le cas où les données de communication (15) de celui-ci sont rejetées au niveau du premier port (15) parce que l'appareil (15) n'a pas été authentifié avec succès.

2. Procédé selon la revendication 1, dans lequel des données de diagnostic (25) de l'appareil (5) générées pour la demande de diagnostic (23) sont transmises à l'appareil de diagnostic (10) dans le second VLAN (24) indépendamment du résultat de vérification.

3. Procédé selon l'une quelconque des revendications précédentes, dans lequel des données de communication (15) de l'appareil (5) sont transférées par le dispositif de commutation (3) dans le premier VLAN (16) tant que la vérification d'authenticité perdure.

4. Procédé selon l'une quelconque des revendications précédentes, dans lequel les données de diagnostic (25) sont transférées uniquement dans le cas où un résultat de vérification d'une vérification d'authenticité concernant l'appareil de diagnostic (10) est positif.

5. Procédé selon l'une quelconque des revendications précédentes, dans lequel le second VLAN (25) est établi de manière dynamique.

6. Procédé selon l'une quelconque des revendications précédentes, dans lequel la vérification d'authenticité de l'appareil (5) est effectuée durant un démarrage du véhicule automobile (1).

7. Procédé selon l'une quelconque des revendications précédentes, dans lequel une instruction de blocage est reçue par le dispositif de commutation (3) et, en fonction de l'instruction de blocage et indépendamment du résultat de vérification, les données de communication (15) de l'appareil (5) sont rejetées au niveau du premier port (8).

8. Dispositif de commutation (3) pour un véhicule automobile (1), avec des ports (7, 8) pour le branchement d'appareils (4, 5) du véhicule automobile (1) et avec un dispositif de commande (17) qui est conçu pour effectuer un procédé selon l'une quelconque des revendications précédentes.

9. Véhicule automobile (1) avec un dispositif de commutation (3) selon la revendication 8, au niveau de chacun des ports (7, 8) duquel est branché un appareil (4, 5) du véhicule automobile (1) et par lesquels un réseau de communication (2) est fourni pour les appareils (4, 5) pour l'échange de données de communication (15) dans un premier VLAN (16).

10. Véhicule automobile (1) selon la revendication 9, dans lequel un ou quelques-uns ou chacun des appareils (4, 5) sont chacun un appareil de commande pour régler un mode de marche et/ou une dynamique de marche du véhicule automobile (1).
